# EUROPEAN PATENT APPLICATION

(11) **EP 4 199 516 A1**
(43) Date of publication of application: **21.06.2023**
(21) Application number: 21215456.1
(22) Date of filing: 17.12.2021
(51) Int. Cl.: H04N 19/132, H04N 19/137, H04N 19/17, H04N 19/172, H04N 19/507, H04N 19/587, H04N 19/597

(54) **REDUCTION OF REDUNDANT DATA IN IMMERSIVE VIDEO CODING**

(71) Applicant: Koninklijke Philips N.V., 5656 AG Eindhoven (NL)
(72) Inventor: VAN GEEST, Bartholomeus Wilhelmus Damianus, Eindhoven (NL); KROON, Bart, Eindhoven (NL)
(74) Representative: Philips Intellectual Property & Standards

(57) **Abstract**

A method for encoding immersive video. The method comprises obtaining video sequences of a scene, analyzing the video sequences for temporally redundant data between frames of the video sequences and determining at least one temporal level of detail, TLoD, value for each video sequence based on the analysis. The TLoD values are indicative of an amount of temporal redundancy in the video sequences. The video sequences are encoded with temporal encoding parameters determined based on the corresponding TLoD values.

## Description

### FIELD OF THE INVENTION

The invention relates to immersive video coding. In particular, the invention is related to encoding and decoding immersive video data.

### BACKGROUND OF THE INVENTION

Immersive video is video that is played-back on, for example, a VR headset. The viewer has freedom to look around and move around, although limited, through the scene. Some examples of immersive video may also be referred to as Free View, 6-degrees-of-freedom (6DoF) or 3DoF+. ISO/IEC 23090-12 MPEG Immersive video (MIV) is an emerging standard where metadata is used on top of existing video codecs to enable and standardize immersive video.

An immersive video system typically involves multi-view video cameras that capture a 3D-scene from various viewpoints. The captured videos are provided with captured or estimated depth-maps that allow re-projecting scene elements to other (virtual) camera viewpoints. Immersive videos may also be provided with video-based point-clouds (V-PCC), mesh-based coding or multi-plane images (MPI).

For immersive video, where omnidirectionality is combined with multi-view (parallax), the amount of visual data is high. Transmitting all multi-view video data (as captured) to a playback client is impractical as transmission resources (bitrate / bandwidth) and decoding resources (pixel-rate/memory) are limited.

The MIV standard facilitates the reduction of redundancy of the multi-view set. Using MIV, the original (image + depth) data set is encoded into texture atlases with the most relevant regions of visual information densely packed together. The way these regions are packed is subsequently encoded in metadata that joins the video bitstream. This representation of a packed texture atlas with metadata still allows the reconstruction of an arbitrary viewpoint at the client. However, it does so with the advantage of a reduced bitrate as well as reduced pixel rate compared to transmitting the original full multi-view data set.

However, it is noted that the redundancy reduction is obtained from the spatio-angular domain. In other words, the redundancy in multi-view captures is reduced for each moment in time (i.e. each frame)

### SUMMARY OF THE INVENTION

The invention is defined by the claims.

To render an output view at the immersive video client, the decoded visual data is reprojected from the way it is represented in the transmitted texture-atlas to the target viewport. In that process, the data is first unprojected to 3D space (e.g. using the decoded depth) and subsequently projected to the target view that is presented to a viewer.

When considering this process over time, the intermediate unprojected 3D data is equal for regions in subsequent video frames that represent non-moving objects. This also holds for video where cameras are moving, and the 3D coordinate system is aligned with the camera movement. It implies that the data that those regions in subsequent video frames represent, is redundant.

Exploiting this temporal redundancy gives an opportunity for bitrate and pixel-rate reduction when encoding. Additionally, this realization gives rise to reduction the computational complexity on the client (i.e. decoder).

According to examples in accordance with an aspect of the invention, there is provided a method for encoding immersive video, the method comprising;
obtaining video sequences of a scene;
analyzing the video sequences for temporally redundant data between frames of the video sequences;
determining at least one temporal level of detail, TLoD, value for each video sequence based on the analysis, wherein the TLoD values are indicative of an amount of temporal redundancy in the video sequences; and
encoding the video sequences with temporal encoding parameters determined based on the corresponding TLoD values, wherein:
   the temporal encoding parameters are determined such that video sequences with a higher amount of temporal redundancy, indicated by the TLoD values, are encoded with different temporal encoding parameters compared to video sequences with lower amounts of temporal redundancy.

Immersive video typically comprises a large amount of data which needs to be processed in order to generate an interpolated view. The immersive video data of a scene can comprise images, video sequences, depth data, transparency data, GPS data, motion data etc. The immersive video data can then be used to generate an interpolated view, which enables a viewer to view the scene from different virtual positions and orientations within the scene. As immersive video data typically comprises multiple video sequences from different view (i.e. different positions and/or angles), there is often a lot of spatially redundant pixel data overall. The immersive video may be six degree of freedom (6DoF) video.

It has been further realized by the inventors that there may be temporally redundant data in subsequent frames of the video sequences when, for example, objects are not moving. Thus, it is proposed to determine at least one TLoD value for each video sequence which can help determine the temporal encoding parameters at which to encode the video sequence. For example, the TLoD value may be used to determine the frame rate/temporal resolution at which to encode the video sequence.

The TLoD values thus enable video sequences which comprise temporally redundant data to be encoded at a lower bit-rate whilst ensuring that non-redundant data is encoded at a higher bit-rate relative to how they would conventionally be encoded (i.e. without TLoD values). In some cases, the temporal encoding parameters may also reduce the pixel-rate for temporally redundant data.

Temporal encoding parameters are parameters which affect the temporal resolution of the video sequences and/or the inter-frame encoding of the video sequences and may include the frame rate, the group of picture (GOP) structure and the temporal delta quantization parameters (QPs).

Non-temporal encoding parameters may have to be adjusted in order to adjust the overall bit-rate.

The determined temporal encoding parameters affect the bit-rate of the encoded video sequences and, thus, for video sequences with TLoD values indicating higher amounts of temporal redundancy, the temporal encoding parameters can be determined such that they lower the bit-rate of a subset of the frames in a time window, and/or skip a subset of the frames.

Temporally redundant data may be data in a frame of a video sequence which is, when represented in 3D-space, the same, or substantially the same, as the data in the previous frame(s) of the video sequence.

Obtaining the video sequences may comprise obtaining, in real time, the latest available frame of the video sequences.

Analyzing the video sequences may comprise analyzing at least the latest available frame of the video sequences. In some instances, analyzing the video sequences may comprise analyzing at least the two latest available frames.

Analyzing the video sequences may comprise identifying moving objects in the video sequences. Additionally, determining the TLoD value(s) for a video sequence may be based on whether a moving object is identified in the video sequence. If an object is moving in the video sequence, a TLoD value is determined which indicates a lower amount of temporal redundancy. In other words, when movement is detected, a higher TLoD value may be selected than when no movement is detected, where a higher TLoD value indicates a lower amount of temporal redundancy.

Analyzing the video sequences may comprise identifying one or more areas of interest, wherein determining the TLoD value(s) for a video sequence may be based on whether an area of interest is identified in the video sequence. The particular TLoD value may be dependent on the importance of the area of interest such that, the more important an area is, the lower the amount of temporal redundancy which is indicated by the TLoD value.

An area of interest is an area which may be considered important by a viewer or of interest to the viewer. For example, an area of interest may be an area which includes or consists of an object, a person, or an area at which an object and/or person may be expected at a future time. An area of interest may be defined by a user or an algorithm built to identify (and possible classify) the areas of interest.

The TLoD values may be determined by analyzing the motion characteristics of objects in a scene. Salient objects will typically be given TLoD values representing lower amounts of temporal redundancy even if they do have some temporal redundancy. For example, a salient objects may not move for some frames (and thus have temporal redundancy) but it may be expected to move and thus it may be preferable to give it an exaggerated TLoD value indicative of a low amount of temporal redundancy. In other words, the saliency or the importance of an object may be further used to determine the TLoD value.

It should be noted that the analysis of the video sequences can comprise comparing frames from one video sequence to later frames from a different video sequence. This is because there may be temporally redundant data between video sequences (e.g. a moving camera may capture new information which has already been captured by other cameras.

In an example, captured multi-view video sequences are first pruned per time-instance (i.e. spatially redundant parts are removed). From the pruned multi-view video sequences, image regions that represent static objects or scene elements (e.g. the background) are identified. To do so, the pruning process is extended to the temporal domain. The visual data from a frame at n=0 is re-projected to the later frames (including different viewpoints) from n=1, through to n=M-1 (where M is the total number of input frames).

The regions for which these re-projections are sufficiently accurate (e.g. the difference in pixel data from the re-projection to the later frames is sufficiently small) may be marked as "static". Their origin frame (at n=0) may be marked as 'static' and the target frames (at n=1 through n=M-1) are temporally pruned from the multi-view set. For the re-projection in the temporal domain, information on the camera movement (pose transformation) is required. This information can be either obtained from meta-data or it can be estimated from the content. In this example, the mark of "static" is a TLoD value which indicates a high amount of temporal redundancy.

Further, the image regions that are marked as 'static' may be packed into an atlas which only includes image regions with TLoD = "static" and, additionally, the atlas may be added to a sub-bitstream which only includes atlases for TLoD = "static". This process may occur once for every M input frames.

In this example, the other image regions may be assumed to have a lower amount of temporal redundancy and thus given a different TLoD value (e.g. TLoD = "main"). These image regions may be packed into a "main" atlas-frame that is added to the "main" sub-bitstream for every input frame.

An advantage of this method is that the resulting encoded video sequences (and typically the resulting atlases) either have fewer inter-frames or the inter-frames are encoded with a lower bit-rate compared to the same video sequences if they had been conventionally encoded.

With some video encoding methods a given encoded frame may comprise a mixture of intra-coded and inter-coded blocks. Therefore, it may be more difficult to identify the "inter-frames". In these cases, an advantage of the method can be referred to as having a larger fraction of the bit-rate taken by a single frame within a time period containing the single frame and at least one other frame.

In general, the method enables a reduction in average bit-rate for the encoded video sequences compared to the bit-rate if the same video sequences had been encoded with conventional encoding methods.

The method may further comprise defining two or more image regions for the video sequences, wherein determining the TLoD values for the video sequences comprises determining a TLoD value for each image region and wherein the TLoD value for an image region is for determining the temporal encoding parameters to encode the image region.

Defining image regions may comprise splitting a video sequence into image regions (i.e. dividing the video sequence into multiple image regions) or identifying image regions within the video sequence, wherein each image regions has a smaller spatial size than a frame of the video sequence.

Defining image regions for the video sequences enables only the non-redundant sections of a video sequences to be given the TLoD value corresponding to the lowest amount of temporal redundancy whilst keeping temporally redundant sections of the video sequences with TLoD values corresponding to higher amounts of temporal redundancy. This distinction between different sections of the video sequences further reduces the overall bit-rate.

An image region is a part, or a section, of a video sequence in the spatial/angular domain. In other words, an image region is a subset of pixels of a video sequence.

A computer vision, complexity and coding trade-off exists between defining the shape of the image regions as accurately as possible, vs. accepting some residual temporal redundancy (e.g. using rectangular patches to reduce the time taken to define the image regions but thereby increasing the temporal redundancy). The trade-off may depend on the processing resources available during the encoding of the video sequences (i.e. determining the TLoD values for M frames should usually take less time than the time spanned by the M frames).

The temporal encoding parameters may include the frame rate at which the video sequences or image regions of the video sequences are encoded and, the higher the amount of temporal redundancy indicated by a TLoD value, the lower the frame rate at which the corresponding video sequence or image region is encoded.

If a video sequence (or an image region) has a TLoD value corresponding to the lowest amount of temporal redundancy, said TLoD value may indicate that the video sequence (or image region) must be encoded at a highest frame rate (e.g. 60 fps or 30fps). The highest frame rate indicates the highest frame rate at which any video sequence or image region can be encoded. For example, the highest frame rate may be the frame rate at which the video sequences were obtained.

In an example, the TLoD is a positive integer and the frame rate is equal to the nominal frame rate (i.e. the frame rate of the video sequences) divided by the TLoD.

In another example, the TLoD is an ID that corresponds to a set of coding parameters, one of which is the output frame rate. The ID may further correspond to instructions for other non-temporal parameters in order to manage the overall bit-rate of the encoded video sequences.

The method may further comprise packing the video sequences or image regions of the video sequences into one or more atlases from a group of atlases, wherein each atlas in the group of atlases corresponds to a different TLoD value and the video sequences or image regions are packed into one or more atlases with the same corresponding TLoD value.

This may enable an encoder to efficiently calculate the packing of the video sequences and/or image regions.

Encoding the video sequences may comprise encoding the video sequences or image regions of the video sequences into one or more sub-bitstreams, wherein each sub-bitstream corresponds to a TLoD value and the video sequences or image regions are encoded into a sub-bitstream corresponding to the respective TLoD value of the video sequences or image regions.

This may enable a more efficient decoding of the video sequences or image regions as only some video sequences/image regions (from the multiple video sequences in multi-view data), corresponding to particular TLoD values, may be needed and thus the video sequences with different TLoD values may not need to be decoded. Additionally, encoding into separate sub-bitstreams may improve the coding efficiency.

Typically, a sub-bitstream consists of units, and the bitstream is formed by multiplexing the units of the sub-bitstreams. It is typically possible to extract a sub-bitstream from a bit-stream without loss of information using a demultiplexer that filters the units and removes or replaces any headers of the container format.

Multiplexing (sometimes referred to as muxing) is a method by which multiple signals (in this case, the sub-bitstreams) are combined into a single signal (in this case the bitstream).

Using different sub-bitstreams per TLoD value enables the different sub-bitstreams to have different coding parameters therefore improving the coding efficiency as the choice of parameters within a single bitstream are typically more constrained.

The method may further comprise packing the latest available frames for the video sequences or image regions of the video sequences with the TLoD value corresponding to the lowest amount of temporal redundancy into an atlas and packing a previous, repeated, frame for the video sequences or image regions of the video sequences with TLoD values corresponding to a higher amount of temporal redundancy into the atlas.

In other words, frames for video sequences and/or image regions with TLoD values which correspond to a higher amount of temporal redundancy can be repeated from previous frames when packing an atlas. As the data in video sequences/image regions with the afore-mentioned TLoD values is expected to have temporally redundant data, it will not significantly affect the quality of a resulting interpolated frame.

This enables a reduction in bit-rate caused by trivial prediction of data (e.g. during compressing/encoding) - for example, if the atlas is subsequently encoded using conventional 2D video compression techniques. Repeating the frames may also avoid using additional video bitstreams and does not require patches of different TLoD values to be separately packed, which may result in a more compact packing.

The method may further comprise packing into an atlas, at a first time, the latest available frame for the video sequences or image regions of the video sequences with TLoD values corresponding to the lowest amount of temporal redundancy and higher amount of temporal redundancy and packing into an atlas, at a second, later, time, only the latest available frames for the video sequences or image regions of the video sequences with TLoD values corresponding to the lowest amount of temporal redundancy.

Packing the frames for the video sequences or image regions with higher amounts of temporal redundancy at the first time but not at the second time enables a reduction in the bit-rate as the frames with higher amounts of temporal redundancy may not be needed as often as the frames with the lowest amount of temporal redundancy. In general, video sequences or image regions with lower amounts of temporal redundancy are packed more often than video sequences or image regions with higher amounts of temporal redundancy.

Video sequences or image regions with TLoD values corresponding to higher amounts of temporal redundancy are not packed at the second, later, time.

The invention also provides a method for decoding video sequences or image regions of a scene, the method comprising:
obtaining two or more encoded video sequences or image regions of the scene for use in the generation of an interpolated view;
obtaining a temporal level of detail, TLoD, value for each video sequence or image region, wherein the TLoD values are indicative of an amount of temporal redundancy in the video sequences or image regions and representative of the temporal encoding parameters used to encode the video sequences or image regions; and
decoding the encoded video sequences or image regions based on the TLoD values.

The TLoD value for a video sequence or image region may be included in the metadata for the said video sequence or image region.

The use of TLoD values enables the processing complexity during decoding to be reduced by giving an indication of the temporal encoding parameters at which the video sequences or image regions were encoded and, thus, enabling a decoder to decode the video sequences accordingly.

The frame rate (or other temporal encoding parameters) of the video sequences or image regions may be derivable from the TLoD value and, thus, decoding is performed according to the TLoD value. Alternatively, the TLoD value may be derivable from other parameters such as the ratio between two frame rates.

Decoding the image frames may include pre-processing (e.g. filtering, color correcting etc.), warping (e.g. un-projecting and re-projecting), synthesizing/rendering an interpolated view etc.

The use of TLoD values enables a decoder to reduce the amount of data which needs to be decoded over time as some of the (later) frames of the video sequences or image frames with TLoD values corresponding to higher amounts of temporal redundancy may have temporally redundant data and thus decoding the (later) frames may not be necessary when previous frames have already been decoded.

Profiles-tiers-level (PTL) information may include a maximum pixel rate. The prescribed calculation to determine the PTL may consider that image regions with a higher TLoD value contribute less to the pixel rate.

In one example, the TLoD value may be used to derive suitable rendering parameters. For instance, some rendering parameters may be able to provide a crisper image but are only suitable for slow moving content as, for fast moving content, temporal stability may be compromised. A temporal filter may be a rendering parameter which can be tuned based on the TLoD values.

The temporal filter is typically used to reduce noise (e.g. flickering of the edges). However, it may also cause blur or reduce image quality for fast moving objects if the strength of the temporal filter is made too high. Thus, the TLoD value may be used to inform the strength of the temporal filter.

The decoding method may further comprise storing in computer storage memory the latest available frame of the video sequences or image regions with TLoD values corresponding to higher amounts of temporal redundancy for use in a second, subsequent, interpolated view.

The latest available frame of a video sequence or image region may be stored in the computer storage memory for a time period dependent on the corresponding TLoD value.

Decoding the video sequences or image regions may comprise pre-processing the latest available frame of the video sequences or image regions for use in a first interpolated view and storing, in computer storage memory, the pre-processed frames with TLoD values corresponding to higher amounts of temporal redundancy for use in a second, subsequent, interpolated view.

This enables frames of video sequences or image regions which are already pre-processed (e.g. filtered, color corrected etc.) to be further used in a subsequent interpolated view and thus reduces the amount of subsequent pre-processing required.

The amount of time for which a pixel is stored in memory (e.g. cached) may be dependent on the corresponding TLoD value.

Decoding the video sequences or image regions may comprise obtaining or generating depth components of the scene, assigning, using the depth components, three dimensional, 3D, coordinates to pixels in the latest available frame of the video sequences or image regions for use in a first interpolated view and storing, in computer storage memory, the pixel data and the corresponding 3D coordinates for the pixels corresponding to frames with TLoD values corresponding to higher amounts of temporal redundancy for use in a second, subsequent, interpolated view.

This enables temporally redundant pixels which already have a 3D coordinate assigned to be further used in a subsequent frame and thus reduces the amount of subsequent processing required. Temporally redundant pixels may be pixels which have the same, or substantially the same, pixel data as the corresponding pixel in the previous frame(s).

Assigning the 3D coordinates may be referred to as "unprojecting" to 3D space or as a first step for warping a frame of a video sequence or image region.

Assigning a 3D coordinate to a pixel may be based on the depth associated with the pixel obtained from a depth component and the pose of the camera which obtained the frame. For example, the 3D coordinate may be defined by the sum of the position (obtained from pose of the camera) and the vector generated from the orientation of the pose and the magnitude of the depth.

The amount of time for which a pixel is stored in memory (e.g. cached) may be dependent on the corresponding TLoD value.

The depth components may be depth maps. Other depth components may include vertex positions (an XYZ value per pixel), a point cloud, a mesh (typically determined from vertices, indices and vertex positions), a mesh including attributes (e.g. color) or a filtered version of depth maps (e.g. depth maps which have been up-scaled using geometry).

The invention also provides a computer program product comprising computer program code which, when executed on a computing device having a processing system, cause the processing system to perform all of the steps of the encoding and/or decoding methods described above.

The invention also provides a system for encoding immersive video, the system comprising a processor configured to;
obtain video sequences of a scene;
analyze the video sequences for temporally redundant data between frames of the video sequences;
determine at least one temporal level of detail, TLoD, value for each video sequence based on the analysis, wherein the TLoD values are indicative of an amount of temporal redundancy in the video sequences; and
encode the video sequences with temporal encoding parameters determined based on the corresponding TLoD values, wherein:
   the temporal encoding parameters are determined such that video sequences with a higher amount of temporal redundancy, indicated by the TLoD values, are encoded with different temporal encoding parameters compared to video sequences with lower amounts of temporal redundancy.

The invention also provides a system for decoding video sequences or image regions of a scene, the system comprising a processor configured to:
obtain two or more encoded video sequences or image regions of the scene for use in the generation of an interpolated view;
obtain a temporal level of detail, TLoD, value for each video sequence or image region, wherein the TLoD values are indicative of an amount of temporal redundancy in the video sequences or image regions and representative of the temporal encoding parameters used to encode the video sequences or image regions; and
decode the encoded video sequences or image regions based on the TLoD values.

The invention may further provide a bitstream containing encoded immersive video data, the bitstream comprising encoded video sequences of a scene or image regions of the video sequences and a temporal level of detail, TLoD, value for each video sequence or image region, wherein the TLoD values are indicative of an amount of temporal redundancy in the video sequences or image regions and representative of the temporal encoding parameters used to encode the video sequences or image regions.

The bitstream may comprise a plurality of sub-bitstreams which have been multiplexed, wherein each sub-bitstream corresponds to a different TLoD value.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a method for encoding immersive video according to a first coding strategy;
Fig. 2 shows a method for encoding immersive video according to a second coding strategy;
Fig. 3 shows a method for encoding immersive video according to a third coding strategy;
Fig. 4 shows a method for encoding immersive video according to a fourth coding strategy;
Fig. 5 shows a method for encoding immersive video according to a fifth coding strategy;
Fig. 6 illustrates the generation of interpolated views for immersive video using TLoD values; and
Fig. 7 shows a method for encoding immersive video.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for encoding immersive video. The method comprises obtaining video sequences of a scene, analyzing the video sequences for temporally redundant data between frames of the video sequences and determining at least one temporal level of detail, TLoD, value for each video sequence based on the analysis. The TLoD values are indicative of an amount of temporal redundancy in the video sequences. The video sequences are encoded with temporal encoding parameters determined based on the corresponding TLoD values.

An immersive video encoder in general may employ techniques such as view selection, pixel pruning, clustering and/or packing. For instance, an encoder may pack a subset of the views entirely into a video frame, or in another example, the encoder may use algorithms such as the MaxRect algorithm to pack (freeform) image regions (patches) into a video frame. Such a video frame is a collage of patches often called an atlas or canvas. There is also metadata to indicate how the pixels in the atlas map to the pixels in the source views. There may also be unused padding, especially in the case of freeform patches.

In general, an image region of a source view may be omitted, split or coded at a specific location and orientation within an atlas. The image region may be rectangular (block/tile) or a freeform shape (cluster). There may be one or more video bitstreams for each of the component types (texture, geometry, transparency, etc.), or alternatively multiple component types may be packed into a single frame.

Conventionally, immersive video data is packed (e.g. in rectangular regions: patches) into a more compact texture atlas holding only the most relevant visual data. In other words, spatial redundancy is removed.

However, it has been recognized that some of the packed visual data is required every frame whilst some of the visual data (which is not spatially redundant) may not be required. Additionally, it has been recognized that there may be different amounts of temporal redundancy (e.g. a different number of frames for which the visual data is temporally redundant). For example, some of the temporally redundant visual data may be required every other frame whilst other temporally redundant visual data may be required only once for the entire sequence.

The encoder assigns a temporal level of detail (TLoD) to image regions whereby, in general, at least two different levels/values are used. The image regions can then be coded with temporal encoding parameters (e.g. including temporal resolution) according to the TLoD of the image regions.

More generally, each video sequence (i.e. different views) from which the image regions are obtained are assigned one or more TLoDs and the video sequences (or part of the video sequences, i.e. the image regions) are encoded separately. In practice, the distinction between video sequences and image regions is arbitrary as an image region is a sequence of frames obtained from part of a video sequence, which in turn is also a video sequence. However, for the sake of describing the invention, the video sequences will be treated as sequence of frames from original views captured by the cameras and the image regions are regions of the video sequences obtained from the video sequences (i.e. patches from the original views).

Examples below will be explained in terms of coding image regions. However, it will be appreciated that equivalent methods may be used for packing video sequences with different TLoD values. The TLoD values are used to reduce temporal redundancy when coding immersive video. Similarly, the use of image regions or patches may help to reduce spatial redundancy between video sequences. Thus, it will be appreciated that combining the use of image regions with TLoD can significantly reduce overall redundancy (i.e. temporal and spatial redundancy).

In a first example, the TLoD may have values "full", indicating no temporal redundancy (or minimal temporal redundancy) of an image region, or "static" / "reduced", indicating that the image region is static (i.e. high amount of temporal redundancy) for the duration of the video sequence or when the TLoD metadata on the image region is refreshed. The latter (i.e. refreshed TLoD metadata) is most useful for image regions that form atlas patches as the patches may be updated at a low rate but multiple times per video sequence.

In a second example, the TLoD may be a temporal scaling factor, such that the value TLoD = 1 corresponds to full temporal detail (e.g. 60 Hz), and TLoD = 4 corresponds to a quarter of the full temporal detail (e.g. 60/4 = 15 Hz).

It has been realized that there are multiple alternative coding strategies for immersive video with multiple image regions of mixed TLoD. Some of the alternative coding strategies will be explained below in further detail.

A first coding strategy consists of packing the image regions into sub-frames (i.e. sub-atlas) based on the TLoD values. The encoder may divide frames of the video sequences into sub-frames, such as tiles, stripes etc. whereby each sub-frame is associated with a specific TLoD value and is packed with source image regions of that specific value. This enables the encoder to efficiently calculate packing parameters as image regions with higher temporal redundancy may benefit from different packing parameters or strategies compared to image regions with lower temporal redundancy. In some cases there is a clear benefit in packing image regions of different TLoD separate.

Sub-frames (e.g. tiles) are a mechanism in video encoding whereby distinct (rectangular) image areas can get special encoding properties. Here, sub-frames are used to encode image regions having different TLoD values with different encoding parameters.

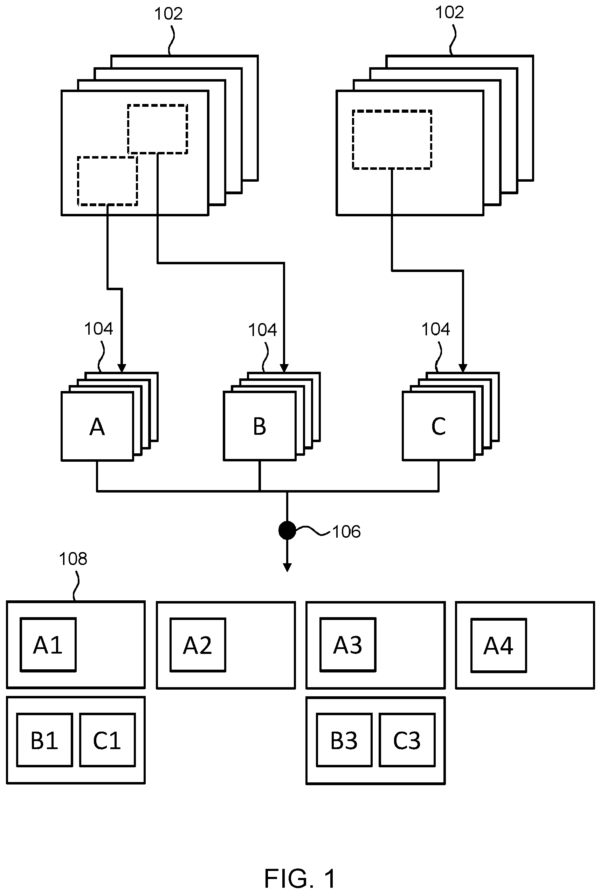

Fig. 1 shows a method for encoding immersive video according to the first coding strategy. Video sequences 102 are obtained (in this case containing four frames) and image regions 104 are further defined from the video sequences 102. In this case, three image regions 104 are shown named A, B and C. The image regions 104 are then analyzed for temporal redundancy at point 106, are given a TLoD value and are packed into sub-frames 108. Only one reference number is shown for the sub-frames 108 in order to keep the illustration clear.

For the purposes of illustration, the TLoD values given to the image regions A, B and C affect the frame rate at which the image regions 104 are packed. Image region A is given a TLoD value indicative of no temporal redundancy, and thus full frame rate, whilst image regions B and C are given TLoD values indicative of some temporal redundancy and are encoded at half the full frame rate.

Six sub-frames 108 are shown in Fig. 1. The four top sub-frames are for image regions with TLoD = "full" whilst the bottom two sub-frames are for TLoD = "half'. Each of the top sub-frames comprises encoded data for each of the four frames in image region A (i.e. frames A1, A2, A3 and A4). In comparison, the two bottom sub-frames comprise the first and third frames of the image regions B and C (i.e. frame B1 and C1) respectively. As the frame rate for image regions B and C is halved based on their TLoD values, frames B2, C2, B4 and C4 are not encoded and packed into sub-frames.

However, the partitioning of the various TLoD values to the defined sub-frames may not always fit. In order to make all of the image regions fit, the encoder may assign an image region with, for example, a lower TLoD into a sub-frame assigned for a higher TLoD. In essence, this would assign the image region with better temporal encoding parameters (e.g. a higher frame rate) than strictly needed based on the amount of temporal redundancy it contains. This would increase the bitrate compared to what was strictly required. However, by not fully filling the sub-frames, the encoder could fail to pack all data into the limited atlas size.

In an example, when a region of the desired TLoD is not available (e.g. allocated space for TLoD = "static" is full), the encoder may decide to increase or lower the TLoD of the image region to pack the image region with other image regions corresponding to other TLoD values. This may either increase the bit rate or reduce the visual quality depending on the direction of the TLoD difference.

A second coding strategy consists of coding separate sub-bitstreams, each corresponding to different TLoD values. The reduction of temporal redundancy of the immersive video data may be achieved by encoding multiple video sub-bitstreams, each with a different temporal encoding parameters and multiplexing the sub-bitstreams into a bitstream.

This strategy is generally efficient. For example, depending on the video codec, some encoding parameters can only be set for an entire coded video bitstream and not for a region within a coded video bitstream. By splitting the video into multiple sub-bitstreams, it becomes possible to vary these parameters.

The particular coding strategy used may depend on the content to encode and how it is processed. It may depend on the capabilities of a software or hardware platform on which the content is to be consumed. For example, a mobile device may have different hardware and software capabilities from a desktop computer. Some devices may lack the resources or configurability to process multiple sub-bitstreams efficiently, for instance.

However, for some platforms it may be a disadvantage to have more bitstreams than necessary. The main benefit of having separate sub-bitstreams, each corresponding to a different TLoD value, is that a client would have less to decode and set-up for rendering.

Another benefit exists in that the decoder may choose on the sub-bitstream level to decode only part of the bitstreams, or decode different sub-bitstreams in different ways. For instance, the decoder may apply temporal access to decode only a subset of the frames depending on the TLoD values of the sub-bitstreams.

Yet another benefit is that, currently, practically available video encoders may be limited in what parameters can be tuned, but this can be circumvented by encoding multiple video bitststreams. Thus, having multiple sub-bitstreams increases, in practice, the flexibility of choosing encoding parameters

However, decoding multiple sub-bitstreams may, at least, require firmware that enables parallel and synchronized decoding of multiple video bitstreams. There is work to standardize this (e.g. OpenMAX, Vulkan Video, MPEG Video Decoder Interface, etc.) but, currently, especially in mobile platforms (e.g. Android), it may be easier to have less streams to decode.

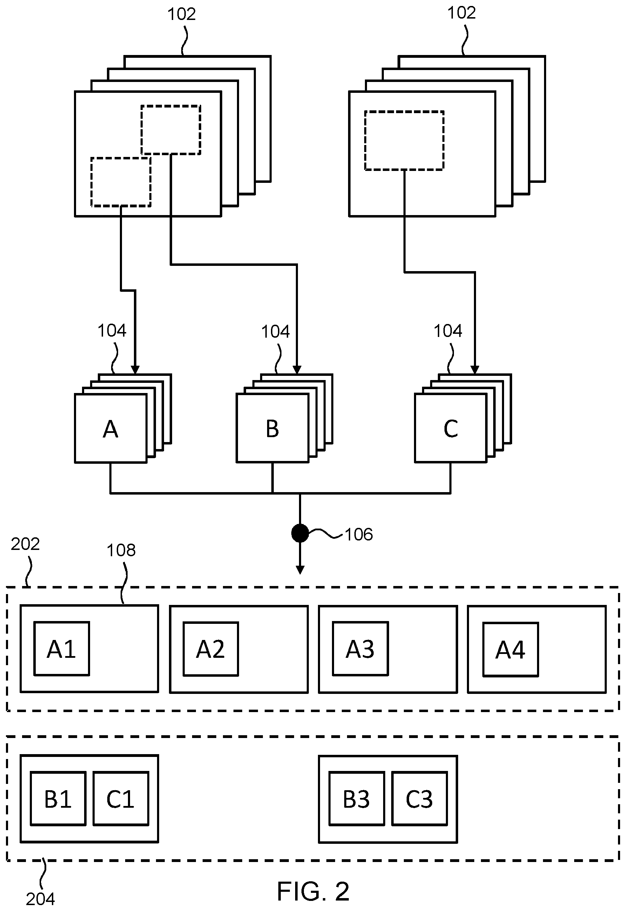

Fig. 2 shows a method for encoding immersive video according to the second coding strategy. Similar to Fig. 1, video sequences 102 are obtained (in this case containing four frames) and image regions 104 are further defined from the video sequences 102. Three image regions 104 are shown named A, B and C. The image regions 104 are then analyzed for temporal redundancy at point 106, are given a TLoD value and are packed into sub-frames 108. Only one reference number is shown for the sub-frames 108 in order to keep the illustration clear.

For the purposes of illustration, the TLoD values given to the image regions A, B and C affect the frame rate at which the image regions 104 are packed. Image region A is given a TLoD value indicative of no temporal redundancy, and thus full frame rate, whilst image regions B and C are given TLoD values indicative of some temporal redundancy and are encoded at half the full frame rate.

Six sub-frames 108 are also shown in Fig. 2. The four top sub-frames are for image regions with TLoD = "full" whilst the bottom two sub-frames are for TLoD = "half". Each of the top sub-frames comprises encoded data for each of the four frames in image region A (i.e. frames A1, A2, A3 and A4). In comparison, the two bottom sub-frames comprise the first and third frames of the image regions B and C (i.e. frame B1 and C1) respectively. As the frame rate for image regions B and C is halved based on their TLoD values, frames B2, C2, B4 and C4 are not encoded and packed into sub-frames.

In Fig. 2, the sub-frames corresponding to TLoD = "full" are encoded into a first sub-bitstream 202 whilst the sub-frames corresponding to TLoD = "half' are encoded into a second sub-bitstream 204. Thus, each of the two sub-bitstreams corresponds to a different TLoD value.

A third coding strategy comprises constructing encoded video sequences with repeating frames. The reduction of temporal redundancy of the immersive video data may be achieved by repeating frames for image regions with higher temporal redundancy. The repetition of the frames means that, when the image regions are encoded (for example, using a conventional video compression algorithm), the repeated frames could be defined based on the previous frames (e.g. making it a P frame or a B frame in the group of pictures structure). This reduces the bitrate due to trivial prediction of video blocks, but may not necessarily reduce the pixel rate.

Repeating the frames may avoid the use for separate sub-bitstreams or it could be used in conjunction with separate bitstreams. Similarly, repeating the frames could also avoid the use of patches of different TLoD to be separately packed which may result in more compact packing.

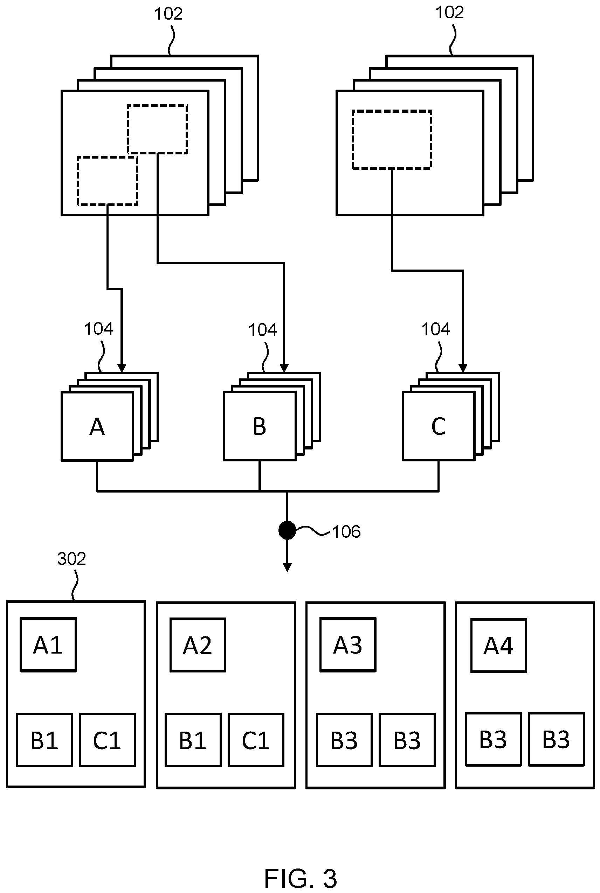

Fig. 3 shows a method for encoding immersive video according to the third coding strategy. Similar to Figs. 1 and 2, video sequences 102 are obtained (in this case containing four frames) and image regions 104 are further defined from the video sequences 102. Three image regions 104 are shown named A, B and C. The image regions 104 are then analyzed for temporal redundancy at point 106, are given a TLoD value and are packed into atlases 302. Only one reference number is shown for the atlases 302 in order to keep the illustration clear.

For the purposes of illustration, the TLoD values given to the image regions A, B and C affect the frame rate at which the image regions 104 are packed. Image region A is given a TLoD value indicative of no temporal redundancy, and thus full frame rate, whilst image regions B and C are given TLoD values indicative of some temporal redundancy and are encoded at half the full frame rate.

Four atlases 302 are also shown in Fig. 3. For image region A with TLoD = "full", each atlas 302 contains a frame (A1 to A4) from image region A. However, the second atlas contains frames B1 and C1 repeated from the first atlas. Similarly, the fourth atlas contains frames B3 and C3 repeated from the third atlas.

A fourth coding strategy consists of constructing tiles or sub-pictures with different video coding configurations. When the atlases are divided into sub-frames (typically tiles or stripes), then there is an opportunity to employ techniques such as HEVC motion-constrained tile sets (MCTS) or versatile video coding (VVC) sub-pictures, and encode the tiles with different parameters. It may be possible (depending on the video codec), to encode tiles with different temporal encoding parameters such as at different frame rates, with different GOP structures and/or with different temporal delta quantization parameters (QP's) depending on the respective TLoD value, or distribution of TLoD values, within a sub-frame.

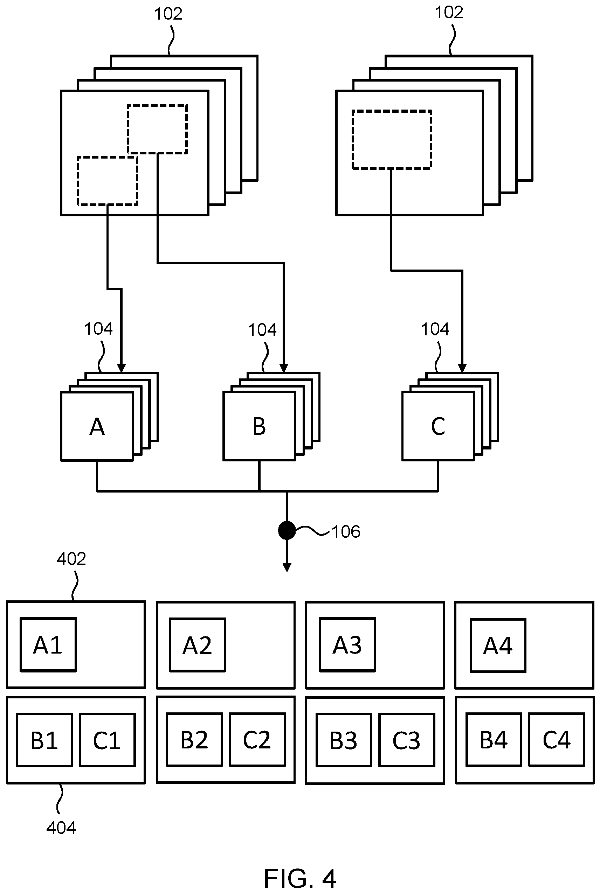

Fig. 4 shows a method for encoding immersive video according to the fourth coding strategy. Similar to Figs. 1, 2 and 3, video sequences 102 are obtained (in this case containing four frames) and image regions 104 are further defined from the video sequences 102. In this case, three image regions 104 are shown named A, B and C. The image regions 104 are then analyzed for temporal redundancy at point 106, are given a TLoD value and are packed into sub-frames 402 or 404.

In this case, the TLoD values given to the image regions A, B and C affect the temporal encoding parameters other than just the frame rate (e.g. GOP structure and/or temporal delta QPs) at which the image regions 104 are packed. Image region A is given a TLoD value indicative of no temporal redundancy whilst image regions B and C are given TLoD values indicative of some temporal redundancy. Thus, the temporal encoding parameters for image region A will be different to the temporal encoding parameters of image regions B and C.

In this example, all four frames from each of the image regions A, B and C are encoded. However, image region A is encoded into sub-frames 402 with higher quality temporal encoding parameters than image regions B and C (e.g. more I frames in the GOP structure or higher quality temporal delta QPs). Image regions B and C are encoded into sub-frames 404 with the lower quality temporal encoding parameters.

A fifth coding strategy consists of so-called temporal multiplexing of image regions with TLoD values indicating some temporal redundancy. Image regions with TLoD values indicating some temporal redundancy are packed into a full frame rate atlas, whereby consecutive frames represent different image regions. In this case, an image region would be associated with a sub-frame index and, to look-up the pixel values of the image region, the sub-frame index and TLoD value are combined to calculate the frame index at which the image region is coded.

The following example of temporal multiplexing will use numerical TLoD values which indicate the frame rate at which an image region is encoded. The TLoD value indicates how much to divide the original frame rate by. In other words, when an image region has TLoD = N, then it has a sub-frame index in {0, 1, 2, ... N - 1} (i.e. each image region has one sub-frame index from the set), whereby image regions with index i are packed into atlases i, N + i, 2N + i, etc.

Thus, when an image region has TLoD = 2, it has a sub-frame index in {0, 1}, whereby image regions with index 0 are packed into video atlases 0, 2, 4, etc. and those with index 1 are packed into atlases 1, 3, 5, etc. Similarly, when an image region has TLoD = 1, then the sub-frame index is trivially 0, and the image region is packed in all atlases 0, 1, 2, etc.

In order to implement temporal multiplexing in the encoder, it may be combined with the fourth coding strategy of having image regions of different TLoD values in different sub-frames. Alternatively, the encoder could try to match up the shape of image regions of equal TLoD and pack these at the same location. Yet another approach would be to pack the TLoD = 1 image regions first, then pack the TLoD = 2 image regions in the remaining space, then TLoD = 4, 8, etc. The inventors have found that this approach may work best with a hierarchy of temporal levels like this binary division (i.e. setting the TLoD value to multiples of 2 only. In that case, the actual TLoD value could be the log₂ of the division of the frame rate thus disallowing other values (i.e. original frame rate TLoD = 0, half frame rate TLoD = 1, quarter frame rate TLoD = 2 etc.).

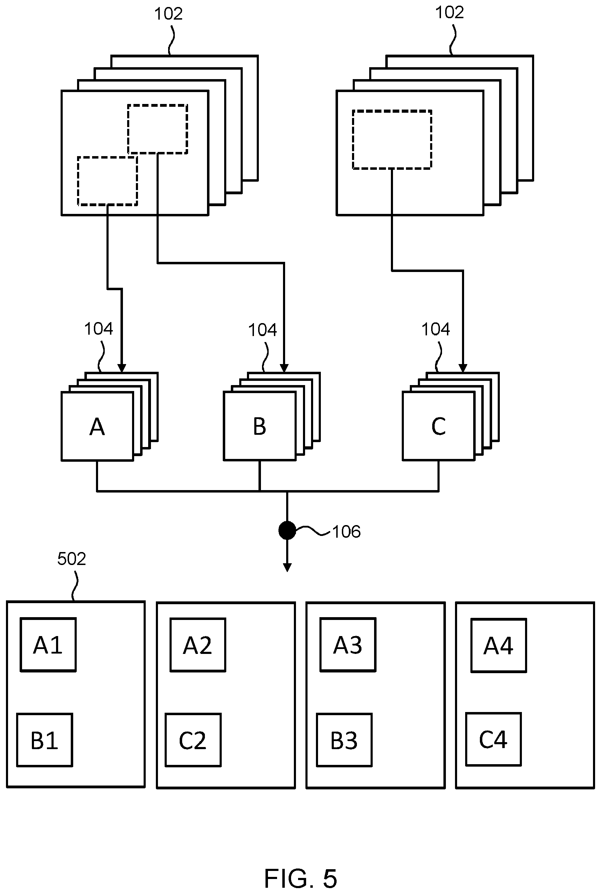

Fig. 5 shows a method for encoding immersive video according to the fifth coding strategy. Similar to Figs. 1, 2, 3 and 4, video sequences 102 are obtained (in this case containing four frames) and image regions 104 are further defined from the video sequences 102. Three image regions 104 are shown named A, B and C. The image regions 104 are then analyzed for temporal redundancy at point 106, are given a TLoD value and are packed into atlases 502. Only one reference number is shown for the atlases 502 in order to keep the illustration clear.

Using the log₂ formulation of the TLoD values for frame rate, image region A is given TLoD = 0 (i.e. full frame rate) whilst image regions B and C are given TLoD = 1 (i.e. half frame rate).

Four atlases 502 are shown in Fig. 5. For image region A with TLoD = 0, each atlas 502 contains a frame (A1 to A4) from image region A. However, in this case, the first atlas contains frame B1, but no frame from image region C and the second atlas contains frame C2, but no frame from image region B. Similarly, the third atlas contains a B frame (B3) but no C frame and the fourth atlas contains a C frame (C4) but no B frame.

Other coding strategies may also be envisioned with the use of TLoD values.

One aspect to consider regarding all of the possible coding strategies is the selection of the temporal encoding parameters to reduce the temporal redundancy in the encoded image regions. Temporal encoding parameters are encoding parameters which affect the number of frames (i.e. temporal resolution or frame rate) or the inter-frame encoding of the image regions. Many such encoding parameters may be used and three in particular will be described in detail below; the frame rate, the GOP structure and the temporal delta QPs.

The frame rate at which an image region is encoded may be chosen based on the temporal redundancy indicated by the TLoD values. For example, an image region comprising M frames of a static, non-moving object will have temporal redundancy in M-1 frames. Thus, in this case, the frame rate could be reduced by a factor of M in order as it is known that only the first frame will contain new data whilst the rest of the frames will contain temporally redundant data.

Similarly, it will be appreciated that the GOP structure of the image region will also affect the temporal redundancy. An image region with visual data with minimal temporal redundancy between the frames of the image region may benefit from a larger number of I frames than image regions with higher temporal redundancy (which may benefit from a larger number of P or B frames).

In a GOP structure, a video frame can use one more other previously decoded frames as reference frames for motion prediction. The temporal layer of such a frame is said to be higher than that of the reference frames, whereby frames that do not rely on any other frames (often called intra-frames or I-frames) are at the lowest temporal layer (i.e. temporal ID of zero). With a hierarchial GOP structure there can be more than two temporal layers and each layer gets assigned a "temporal delta QP" value, for instance, by looking up the temporal ID in a delta QP table. Because frames of a lower temporal layer are used to predict other frames, they are more important and they require a lower QP value. Knowing that a region/video less motion, then the temporal delta QP value of the highest layer(s) could be further increased compared to regions that have motion.

Generally, increasing the temporal delta QPs will lower the visual quality of the data (e.g. often for background sections corresponding to a higher temporal redundancy). However, in some specific cases it may be beneficial to decrease the temporal delta QPs (i.e. increase quality). For example, when an image regions needs to be projected to another temporal location where the deviation (warp) from the original perspective is significant, these image regions may benefit from a decrease in the temporal delta QPs.

Some of the presented coding strategies may require more significant decoding changes (compared to conventional decoding) than other. For example, repeating the frames of the image regions over time (as in the example of Fig. 3) may not require significant changes to the decoder. However, even with the repeating frames, more efficient decoding of the image regions may be realized and will be further explained below.

In general, regardless of coding strategies, the decoder may benefit from TLoD values in the metadata of the encoded immersive video and, in some cases, require the metadata including the TLoD values of the image regions. In general, when a decoder knows that image regions with different TLoD values are present in a bitstream, the decoder may persist some buffers over multiple frames (e.g. caching a texture data in a meshed 3D space) such that; the decoder may be able to skip part of the video decoding process; the decoder may skip the creation of frame buffers; the decoder may skip some filtering such as color conversion; and/or the decoder may skip aspects of the 3D reconstruction (e.g. unprojected points, filtering, and possibly depth estimation) depending on the decoded TLoD value.

For immersive video in which the viewport pose is dynamic (e.g. due to a viewer wearing a head-mounted display) each output frame will have to be rendered, and this may often be on a higher frame rate than strictly required, such as the "full" TLoD frame rate. It will not be possible to skip this rendering step for lower TLoD. However, when the viewport only changes infrequently (e.g. when pressing a key), then also this step can be performed at a reduced temporal resolution, thus saving valuable processing resources.

However, even when the immersive video has to be rendered at the full resolution, data from previous frames can be cached or buffered for image regions with TLoD values indicative of some temporal redundancy, thus reducing the processing resources required even when rendering at full frame rate.

For example, image regions with TLoD = 'static' may be unprojected taking into account their TLoD value (e.g. the number of the frame where the patch was added) and the pose of the camera (rig) at that moment.

The unprojected TLoD = 'static' data may thus be stored in a distinct buffer (e.g. a GPU texture holding the x,y,z world-coordinates, aligned with the video image). This buffer may be combined with a similar buffer that is used for the unprojected TLoD = 'full' data. The buffer for the TLoD = 'full' data may be updated every video frame while the buffer with the TLoD = 'static' data may be cached and re-used for multiple frames.

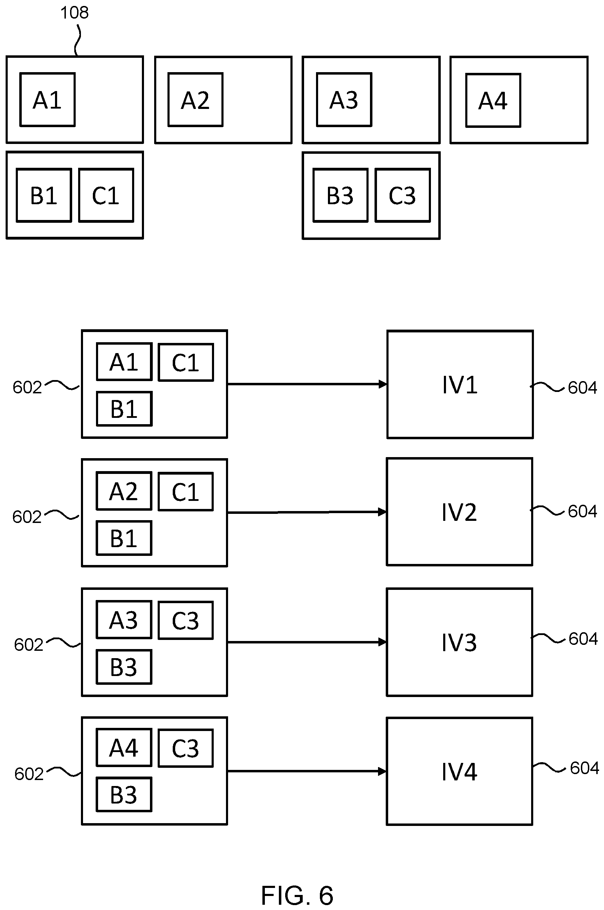

Fig. 6 illustrates the generation of interpolated views 604 for immersive video using TLoD values. Six sub-frames are obtained, containing four frames for image region A (i.e. frame A1 to A4) and two frames for image regions B and C (i.e. B1, B3, C1, C3). The sub-frames 108 are received with TLoD metadata indicating the frame rates of each image region (i.e. image region A has full frame rate, image regions B and C have half frame rate).

Conventionally, frame data is only kept in the buffer 602 for the time necessary to generate the latest interpolated view 604. Thus, the data needed for a first interpolated view IV1 is obtained from a buffer 602 containing data from the frames A1, B1 and C1. However, when generating the second interpolated view IV2, data from the previous frames of image regions B and C may be needed (as there are no frames B2 or C2). Thus, the TLoD values for image regions B and C indicate to the decoder to keep the data from frames B1 and C2 in the buffer 602 (i.e. cache the data) for use in generating IV2. The same occurs for the data from frames B3 and C3 in the generation of the fourth interpolated view IV4.

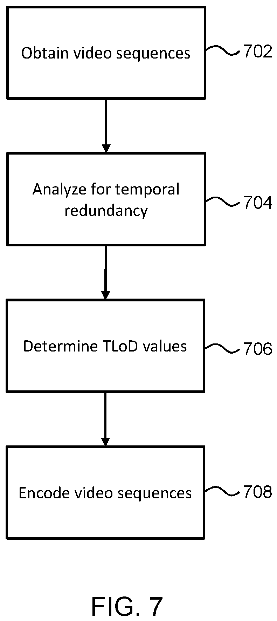

Fig. 7 shows a method for encoding immersive video. The method comprises obtaining, in step 702, video sequences of a scene, analyzing, in step 704, the video sequences for temporally redundant data between frames of the video sequences and determining, in step 706, at least one temporal level of detail, TLoD, value for each video sequence based on the analysis. The TLoD values are indicative of an amount of temporal redundancy in the video sequences. The method also comprises encoding, in step 708, the video sequences with temporal encoding parameters determined based on the corresponding TLoD values.

The temporal encoding parameters are determined such that video sequences with a higher amount of temporal redundancy, indicated by the TLoD values, are encoded with different temporal encoding parameters compared to video sequences with lower amounts of temporal redundancy.

The skilled person would be readily capable of developing an encoding and/or decoding processor for carrying out any herein described method. Thus, each step of a flow chart may represent a different action performed by a processor, and may be performed by a respective module of the processor.

As discussed above, the system makes use of processor to perform the encoding/decoding. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method for encoding immersive video, the method comprising;
obtaining (702) video sequences of a scene;
analyzing (704) the video sequences for temporally redundant data between frames of the video sequences;
determining (706) at least one temporal level of detail, TLoD, value for each video sequence based on the analysis, wherein the TLoD values are indicative of an amount of temporal redundancy in the video sequences; and
encoding (708) the video sequences with temporal encoding parameters determined based on the corresponding TLoD values, wherein:
the temporal encoding parameters are determined such that video sequences with a higher amount of temporal redundancy, indicated by the TLoD values, are encoded with different temporal encoding parameters compared to video sequences with lower amounts of temporal redundancy.

2. The method of claim 1, further comprising defining two or more image regions for the video sequences, wherein determining the TLoD values for the video sequences comprises determining a TLoD value for each image region and wherein the TLoD value for an image region is for determining the temporal encoding parameters to encode the image region.

3. The method of any one of claims 1 or 2, wherein the temporal encoding parameters include the frame rate at which the video sequences or image regions of the video sequences are encoded and, the higher the amount of temporal redundancy indicated by a TLoD value, the lower the frame rate at which the corresponding video sequence or image region is encoded.

4. The method of any one of claims 1 to 3, further comprising packing the video sequences or image regions of the video sequences into one or more atlases from a group of atlases, wherein each atlas in the group of atlases corresponds to a different TLoD value and the video sequences or image regions are packed into one or more atlases with the same corresponding TLoD value.

5. The method of any one of claims 1 to 4, wherein encoding the video sequences comprises encoding the video sequences or image regions of the video sequences into one or more sub-bitstreams, wherein each sub-bitstream corresponds to a TLoD value and the video sequences or image regions are encoded into a sub-bitstream corresponding to the respective TLoD value of the video sequences or image regions.

6. The method of any one of claims 1 to 3, further comprising:
packing the latest available frames for the video sequences or image regions of the video sequences with the TLoD value corresponding to the lowest amount of temporal redundancy into an atlas; and
packing a previous, repeated, frame for the video sequences or image regions of the video sequences with TLoD values corresponding to a higher amount of temporal redundancy into the atlas.

7. The method of any one of claims 1 to 3, further comprising:
packing into an atlas, at a first time, the latest available frame for the video sequences or image regions of the video sequences with TLoD values corresponding to:
the lowest amount of temporal redundancy, and
higher amount of temporal redundancy; and
packing into an atlas, at a second, later, time, only the latest available frames for the video sequences or image regions of the video sequences with TLoD values corresponding to the lowest amount of temporal redundancy.

8. A method for decoding video sequences or image regions of a scene, the method comprising:
obtaining two or more encoded video sequences or image regions of the scene for use in the generation of an interpolated view;
obtaining a temporal level of detail, TLoD, value for each video sequence or image region, wherein the TLoD values are indicative of an amount of temporal redundancy in the video sequences or image regions and representative of the temporal encoding parameters used to encode the video sequences or image regions; and
decoding the encoded video sequences or image regions based on the TLoD values.

9. The method of claim 8, further comprising storing in computer storage memory the latest available frame of the video sequences or image regions with TLoD values corresponding to higher amounts of temporal redundancy for use in a second, subsequent, interpolated view.

10. The method of claim 9, wherein the latest available frame of a video sequence or image region is stored in the computer storage memory for a time period dependent on the corresponding TLoD value.

11. The method of any one of claim 8 to 10, wherein decoding the video sequences or image regions comprises:
pre-processing the latest available frame of the video sequences or image regions for use in a first interpolated view; and
storing, in computer storage memory, the pre-processed frames with TLoD values corresponding to higher amounts of temporal redundancy for use in a second, subsequent, interpolated view.

12. The method of any one of claims 8 to 11, wherein decoding the video sequences or image regions comprises:
obtaining or generating depth components of the scene;
assigning, using the depth components, three dimensional, 3D, coordinates to pixels in the latest available frame of the video sequences or image regions for use in a first interpolated view; and
storing, in computer storage memory, the pixel data and the corresponding 3D coordinates for the pixels corresponding to frames with TLoD values corresponding to higher amounts of temporal redundancy for use in a second, subsequent, interpolated view.

13. A computer program product comprising computer program code which, when executed on a computing device having a processing system, cause the processing system to perform all of the steps of the method according to any of claims 1 to 7 or the method according to any one of claims 8 to 12.

14. A system for encoding immersive video, the system comprising a processor configured to;
obtain (702) video sequences of a scene;
analyze (704) the video sequences for temporally redundant data between frames of the video sequences;
determine (706) at least one temporal level of detail, TLoD, value for each video sequence based on the analysis, wherein the TLoD values are indicative of an amount of temporal redundancy in the video sequences; and
encode (708) the video sequences with temporal encoding parameters determined based on the corresponding TLoD values, wherein:
the temporal encoding parameters are determined such that video sequences with a higher amount of temporal redundancy, indicated by the TLoD values, are encoded with different temporal encoding parameters compared to video sequences with lower amounts of temporal redundancy.

15. A system for decoding video sequences or image regions of a scene, the system comprising a processor configured to:
obtain two or more encoded video sequences or image regions of the scene for use in the generation of an interpolated view;
obtain a temporal level of detail, TLoD, value for each video sequence or image region, wherein the TLoD values are indicative of an amount of temporal redundancy in the video sequences or image regions and representative of the temporal encoding parameters used to encode the video sequences or image regions; and
decode the encoded video sequences or image regions based on the TLoD values.
